# EUROPÄISCHE PATENTSCHRIFT

(11) **EP 2 857 913 B1**
(45) Veröffentlichungstag und Bekanntmachung des Hinweises auf die Patenterteilung: **24.04.2019**
(21) Anmeldenummer: 13186804.4
(22) Anmeldetag: 01.10.2013
(51) Int. Cl.: G06F 11/20, G05B 19/05

(54) **Redundantes Automatisierungssystem**
Redundant automation system
Système d'automatisation redondant

(43) Veröffentlichungstag der Anmeldung: 08.04.2015
(73) Patentinhaber: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(56) Entgegenhaltungen:
- EP-A1- 2 657 797
- EP-A2- 1 291 744
- DE-A1- 19 625 195

## Beschreibung

Die Erfindung betrifft ein redundantes Automatisierungssystem mit mehreren miteinander verbundenen Automatisierungsgeräten, die zur Steuerung eines technischen Prozesses jeweils ein Steuerprogramm verarbeiten.

Im Automatisierungsumfeld werden verstärkt hochverfügbare Lösungen (H-Systeme) gefordert, welche geeignet sind, eventuell auftretende Stillstandszeiten der Anlage auf ein Minimum zu reduzieren. Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformation für diese Peripherieeinheiten nur von einem der beiden Teilsysteme durchgeführt werden, welches als Master arbeitet bzw. die Masterfunktion übernommen hat. Damit beide Teilsysteme synchron ablaufen können, werden diese über die Synchronisationsverbindung in regelmäßigen Abständen synchronisiert. Bezüglich der Häufigkeit der Synchronisation und deren Umfang können verschiedene Ausprägungen unterschieden werden (warmstandby, hot-standby).

Häufig wird von einem H-System ein stoßfreies "Failover" gefordert, falls eines der Teilsysteme ausfällt und auf das andere Teilsystem umgeschaltet werden muss. Dies bedeutet, dass trotz dieser ungeplanten Umschaltung bzw. diesem ungeplanten Wechsel von einem auf das andere Teilsystem diese Umschaltung bzw. dieser Wechsel sich nicht störend auf den zu steuernden technischen Prozess auswirkt. Dabei ist zulässig, dass an den Ausgängen der angeschlossenen Peripherie eine (kurze) Totzeit auftreten darf, während der die Ausgänge auf ihren zuletzt gültigen Prozessausgangswerten verharren. Ein Sprung (Stoß) der Werte an diesen Ausgängen aufgrund der Umschaltung ist jedoch nicht erwünscht und sollte daher vermieden werden. Unter stoßfrei ist daher auch die Stetigkeit des Kurvenverlaufs der Prozessausgangswerte zu verstehen.
Um dies zu erreichen, müssen die beiden Teilsysteme zum Zeitpunkt des Ausfalls den gleichen Systemzustand aufweisen. Dies wird durch das geeignete Synchronisationsverfahren sichergestellt. Verarbeiten beide Teilsysteme die Eingangsinformationen (Eingaben) des Prozesses, so befinden sich beide Systeme dann im gleichen Systemzustand, wenn sie - bei gleichen Prozesseingangsdaten bzw. Prozesseingangsinformationen - ihre jeweiligen "thread-globalen" Daten (gemeinsame Daten von Programmen, insbesondere von Programmen unterschiedlicher Prioritäten) in gleicher Weise verändern. Um dies zu erreichen, stellt das Synchronisationsverfahren sicher, dass die einzelnen Threads der beiden Teilsysteme in gleicher Art und Weise unterbrochen bzw. abgearbeitet werden. Damit ergibt sich ein identisches "Threadgebirge".

Aus dem Siemens-Katalog ST 70, Kapitel 6, Ausgabe 2013 ist ein redundantes, aus zwei Teilsystemen (eine Master- und eine Slave-PLC) bestehendes Automatisierungssystem bekannt, welches dazu vorgesehen ist, die Verfügbarkeit einer zu steuernden Anlage zu erhöhen. Dazu ist das Automatisierungssystem mit Mitteln versehen, welche aufgrund eines Ereignisses zunächst entscheiden, welches Programm gestartet werden muss, um geeignet auf das Ereignis zu reagieren. Für den Fall, dass beispielsweise während der Ausführung eines Programms ein Ereignis in Form eines anstehenden Alarms des zu steuernden technischen Prozesses an einem Meldeeingang des Automatisierungssystems anliegt, wird gewöhnlich das laufende Programm an einem Wartepunkt angehalten und ein Programm gestartet, das zur Analyse des Alarms und zum Einleiten von Maßnahmen vorgesehen ist, welche die Ursache des Alarms beheben. Dieses Automatisierungssystem wird regelmäßig synchronisiert und es ist sichergestellt, dass der Ausfall eines dieser Teilsysteme sich nicht störend auf einen zu steuernden Prozess auswirkt, weil das andere Teilsystem die Ausführung bzw. die Bearbeitung des entsprechenden Teils ihres jeweiligen Steuerprogramms oder die Ausführung bzw. die Bearbeitung der entsprechenden Teile dieses Steuerprogramms fortsetzen kann.

Für den Fall, dass z. B. ein auf einem ersten Teilsystem aufgetretenes Ereignis nicht mit einem zweiten Teilsystem eines zwei Teilsysteme umfassenden Automatisierungssystems synchronisiert wird und nach der Bearbeitung des Ereignisses durch das erste Teilsystem dieses Teilsystem ausfällt, kann der Verlauf eines zu steuernden technischen Prozesses gestört werden; denn das zweite Teilsystem durchläuft - ohne Kenntnis des Ereignisses - einen anderen, die Ausführungs-Reihenfolge der Programme repräsentierenden Programmpfad als den, welchen das zweite Teilsystem in Kenntnis des Ereignisses durchlaufen würde und der auch erforderlich wäre, um den genannten Verlauf des zu steuernden technischen Prozesses nicht zu stören. EP 2657 797 A1 offenbart ein Verfahren zum Betreiben eines redundanten Automatisierungssystems und stellt einen Stand der Technik nach Artikel 54(3) EPÜ dar. Dieses Dokument beschreibt zumindest nicht ein redundantes Automatisierungssystem mit mindestens 2 Master- und einem Slave-PLC.

Es wird darauf hingewiesen, dass unter einem Programm sowohl ein Programm als solches, als auch ein Unterprogramm, ein Teil eines Programms, eine Task, ein Thread, ein Organisationsbaustein, ein Funktionsbaustein oder ein sonstiger geeigneter Programmcode zur Verwirklichung einer Automatisierungsfunktion verstanden wird, wobei die Programme eines Automatisierungssystems gewöhnlich in Prioritätsklassen eingeteilt sind und gemäß ihrer zugeordneten Priorität bearbeitet bzw. ausgeführt werden.

Gewöhnlich ist in einem redundanten Automatisierungssystem für jeweils ein Master-Automatisierungsgerät (Master-PLC) jeweils ein Slave-Automatisierungsgerät (Backup-PLC) als Redundanz-Partner vorgesehen, d. h. dass für n Master-Automatisierungsgeräte 2n Slave-Automatisierungsgeräte erforderlich sind, was einen sehr hohen Hardware-Aufwand bedeutet. Ein derartiges Automatisierungssystem ist kostenintensiv und darüber hinaus ist die Projektierung eines solchen Automatisierungssystems sehr komplex.

Der Erfindung liegt daher die Aufgabe zugrunde, ein Automatisierungssystem der eingangs genannten Art zu schaffen, mittels welchem eine Redundanz mit einem verringerten Hardware-Aufwand verwirklicht werden kann.

Diese Aufgabe wird durch die im kennzeichnenden Teil des Anspruchs 1 angegebenen Maßnahmen gelöst.

Vorteilhaft ist, dass eine (hot-standby-)Redundanz auf eine einfache Weise auch nachträglich verwirklicht werden kann. Eine Redundanz muss nicht zwangsläufig alle Master (Master-Automatisierungsgeräte, Master-PLCs) des Automatisierungssystems umfassen. Es ist möglich, nur eine bestimmte Anzahl Master-PLCs zu selektieren, welche mittels einer Backup-PLC redundant betrieben werden. Aufgrund des geringen Hardware-Aufwands verringert sich im Vergleich zum Stand der Technik im Hinblick auf eine 2n-Lösung die Ausfallrate (MTTF) des Automatisierungssystems. Falls eine der Master-PLCs ausfällt, so übernimmt die Backup-PLC die Funktion dieser Master-PLC. Das dieser Master-PLC zugeordnete Slave-Steuerprogramm der Backup-PLC wird zum Master-Steuerprogramm und verwirklicht die Steuerungsaufgaben dieser ausgefallenen Master-PLC. Dieses Failover geschieht für jede potentiell fehlerhafte Master-PLC stoßfrei, wobei der Ausfall aller Master-PLCs durch die Backup-PLC abgesichert ist.

Die Master-PLCs müssen nicht (aktiv) auf eine Antwort des Slaves bzw. des Backup-Automatisierungsgerätes (Backup-PLC) warten, um ihre Programmverarbeitung fortsetzen zu können; die Übertragung aller relevanten Informationen von den Mastern zu dem Slave erfolgt zeitlich asynchron. Dadurch wird die Verarbeitungsleistung der Master von der für eine Ereignissynchronisation zur Verfügung stehenden Kommunikationsbandbreite entkoppelt, was insbesondere im Hinblick auf das zunehmende Ungleichgewicht zwischen der Steigerung der Verarbeitungsleistung der Prozessoren einerseits und der Steigerung der Kommunikationsleistung andererseits von Bedeutung ist; denn die Kommunikationsleistung kann gewöhnlich nicht mit der zunehmenden Verarbeitungsleistung Schritt halten. Die Synchronisation jedes Masters mit dem Slave nach dem Auftreten von Ereignissen erfolgt derart, dass sowohl die Master als auch der Slave aufgrund der Ereignisse gleiche Programmpfade durchlaufen, wobei die Durchläufe zeitlich asynchron erfolgen. Dies bedeutet, dass die Master im Hinblick auf die Programmver- bzw. -bearbeitung dem Slave zeitlich vorauslaufen bzw. der Slave den Mastern zeitlich nachläuft. Unter einem "Nachlauf" bzw. "Vorauslauf" von dem Slave zu einem der Master wird in diesem Zusammenhang die zeitliche Differenz zwischen dem Beginn der Verarbeitung der Verarbeitungsabschnitte durch diesen Master und dem Beginn der Verarbeitung der Verarbeitungsabschnitte durch den Slave verstanden.

Auch für den Fall, dass für die Master und den Slave (Reserve) unterschiedliche HW-Plattformen mit unterschiedlicher Leistungsfähigkeit vorgesehen sind, gilt Entsprechendes. Aufgrund der asynchronen Kopplung der Master und des Slaves können Laufzeitunterschiede leichter ausgeglichen werden, insbesondere dann, wenn z.B. eine leistungsstarke Backup-PLC im Zeitscheibenverfahren die Reserve-Funktionalität mehrerer Master-PLCs bewerkstelligt. Der zeitliche Nachlauf eines Reserve-Programms (Slave-Programms) wird dabei temporär größer und verringert sich anschließend wieder.

In einer Ausgestaltung der Erfindung ist vorgesehen, dass zum Zeitpunkt der Übermittlung der aktuellen Freigaben dem Slave mittels des jeweiligen Masters auch Prozesseingangswerte übermittelt werden. Die für den Slave relevanten Informationen werden zunächst zusammengefasst bzw. gesammelt und schließlich dem Slave übermittelt. Dies bedeutet im Unterschied zu bekannten zeitlichen Synchronisationsverfahren, im Rahmen derer relevante Informationen gleich zum Slave gesendet werden müssen, einen deutlich verringerten "Verwaltungsaufwand" sowohl für die als Master vorgesehene Automatisierungsgeräte als auch für den Slave bzw. für das Backup-Automatisierungsgerät.

In einer weiteren Ausgestaltung der Erfindung ist vorgesehen, dass durch den Slave nach der Bearbeitung der jeweiligen Verarbeitungsabschnitte die jeweilige Freigabe dem jeweiligen Master quittiert wird. Die Anzahl der unquittierten Freigaben weist den jeweiligen Master auf den aktuellen Nachlauf des Slaves hin, wodurch der jeweilige Master geeignete Maßnahmen ergreifen kann, um den zeitlichen Nachlauf nicht zu groß werden zu lassen.

Als Backup-PLC ist vorzugsweise eine Multi-Core-basierende Einheit vorgesehen, wobei jeder Core der Backup-PLC einer Master-PLC als Redundanz-Partner zugeteilt werden kann. Die Backup-PLC kann auch als leistungsstarker Industrie-PC mit entsprechend ausgestaltetem Arbeitsspeicher und ausgestalteter Verarbeitungsleistung ausgebildet sein.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figuren 1, 2 und 6: redundante Automatisierungssysteme und
- Figuren 3 bis 5: Abläufe einer zeitlich asynchronen Kopplung eines Masters und eines Slaves.

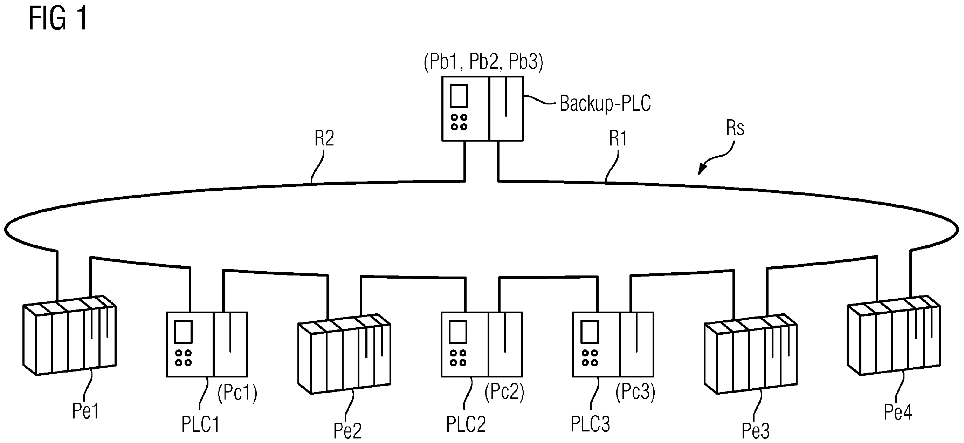

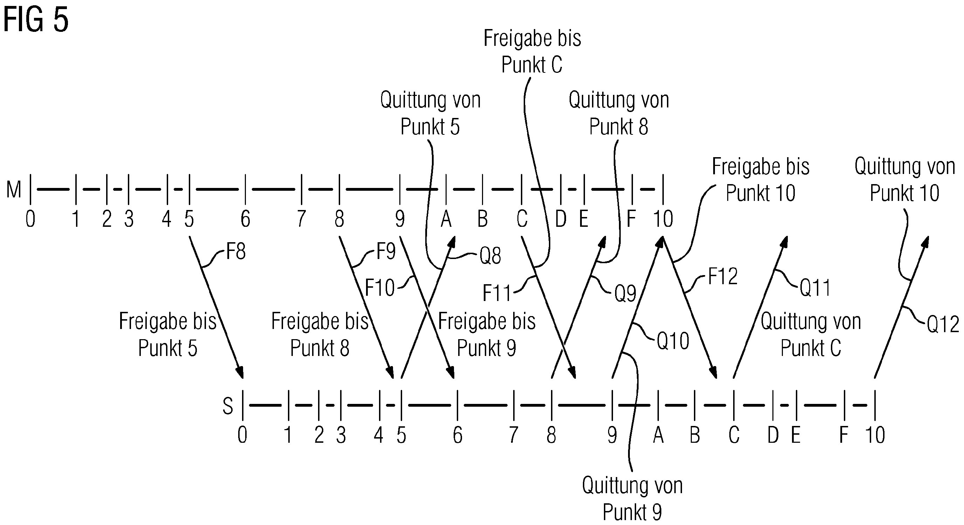

Die in den Figuren 1 bis 6 gleichen Teile sind mit gleichen Bezugszeichen versehen.

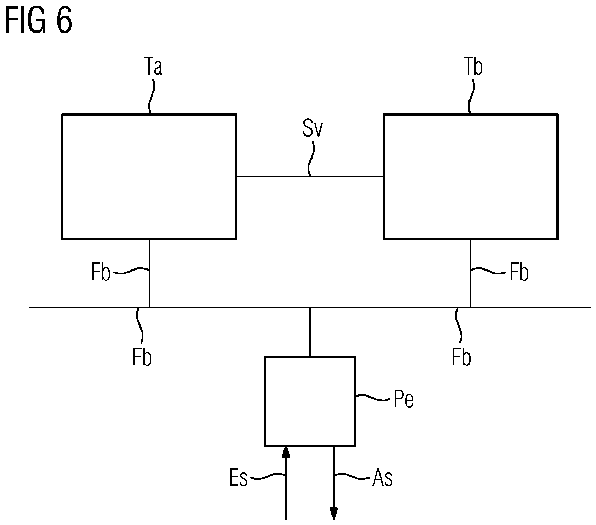

Es wird zunächst auf Figur 6 verwiesen, in welcher ein an sich bekanntes redundantes, zwei Teilsysteme umfassendes Automatisierungssystem dargestellt ist. Ein erstes Teilsystem Ta ist als Master-Automatisierungsgerät (Master-PLC) und ein zweites Teilsystem Tb als Slave-Automatisierungsgerät (Backup-PLC) ausgebildet, wobei die beiden Teilsysteme über einen Feldbus Fb mit einer Peripherieeinheit Pe verbunden sind. Dabei genügt der Feldbus Fb beispielsweise der PROFIBUS-DP-Spezifikation. Prinzipiell sind auch andere Bussysteme, z. B. Ethernet, Fieldbus, Modbus oder aber auch parallele Bussysteme geeignet. Die Peripherieeinheit Pe erhält über Eingangsleitungen Es Signale von Messumformern oder Messwertgebern, die zur Erfassung eines Prozesszustands dienen, und gibt über Ausgangsleitungen As Signale an Stellglieder aus, mit welchen der Prozess beeinflusst wird. Der Prozess sowie die Messumformer, Messwertgeber und Stellglieder sind in der Figur 6 der Übersichtlichkeit wegen nicht dargestellt. Die beiden Teilsysteme Ta, Tb des bekannten Automatisierungssstems arbeiten zyklisch und synchron dasselbe Steuerprogramm ab. Zu ihrer Synchronisation ist eine Synchronisationsverbindung Sv vorgesehen, wobei die Redundanz- und Überwachungsfunktionen über diese Synchronisationsverbindung Sv verwirklicht werden.

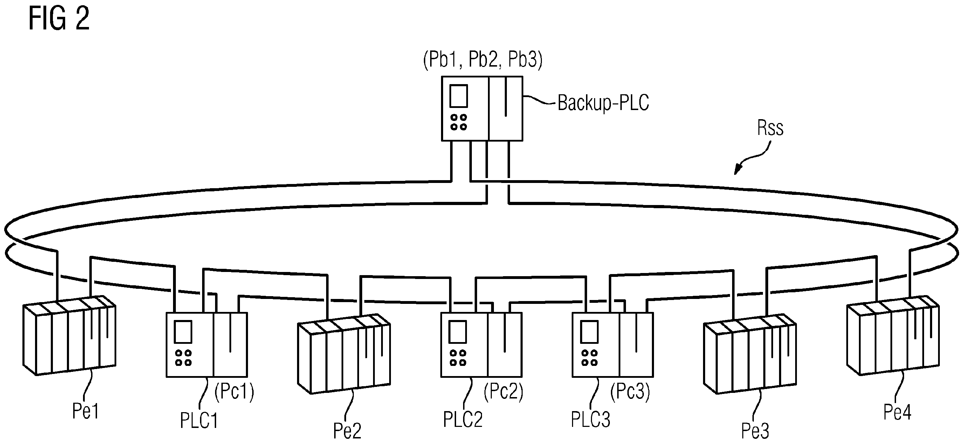

Im Folgenden wird auf die Figuren 1 und 2 verwiesen, in welchen redundante Automatisierungssysteme dargestellt sind. Diese Automatisierungssysteme weisen im vorliegenden Beispiel drei Master-Automatisierungsgeräte PLC1, PLC2, PLC3, vier Peripherieeinheiten Pe1, Pe2, Pe3, Pe4 sowie ein Slave-Automatisierungsgerät Backup-PLC auf, wobei die Automatisierungsgeräte PLC1, PLC2, PLC3, Backup-PLC und die Peripherieeinheiten Pe1, Pe2, Pe3, Pe4 miteinander verbunden sind. Als Verbindung ist im vorliegenden Ausführungsbeispiel eine Ring-Struktur Rs vorgesehen, welche beispielsweise den an sich bekannten PROFINET-Standard nutzt. Selbstverständlich können andere Netzstrukturen bzw. Netztopologien zur Verwirklichung einer Redundanz vorgesehen werden, beispielsweise eine Bus-, oder eine Stern-Topologie oder auch eine Mischform dieser Topologien. Um eine leistungsfähigere Kopplung der Master-Automatisierungsgeräte PLC1, PLC2, PLC3 mit dem Slave-Automatisierungsgerät Backup-PLC zu erzielen, weist das Automatisierungssystem gemäß Figur 2 eine Doppelring-Struktur Rss auf, wodurch die zur Synchronisation erforderlichen Daten von den Peripherie-Daten getrennt übertragen und insbesondere die Umschaltzeiten im Falle eines Failovers verkürzt werden können. Jedes der drei Master-Automatisierungsgeräte PLC1, PLC2, PLC3 verarbeitet ein Steuerprogramm Pc1, Pc2, Pc3, wobei das Slave-Automatisierungsgerät Backup-PLC dazu ausgebildet ist, zu jedem Master-Steuerprogramm Pc1, Pc2, Pc3 ein entsprechendes Slave-Steuerprogramm Pb1, Pb2, Pb3 zu verarbeiten. Dadurch ist sichergestellt, dass z. B. für den Fall, dass das Master-Automatisierungsgerät PLC1 ausfällt, das Slave-Automatisierungsgerät Backup-PLC die Funktion dieses ausgefallenen Masters PLC1 übernehmen kann, weil das Slave-Automatisierungsgerät Backup-PLC das Slave-Steuerprogramm Pb1 verarbeitet, welches dem Master-Steuerprogramm Pc1 des ausgefallenen Master-Automatisierungsgeräts PLC1 entspricht.

Aufgrund dessen, dass das Master-Automatisierungsgerät PLC1 ausgefallen ist, ist die Verbindung Rs unterbrochen und das Slave-Automatisierungsgerät Backup-PLC tauscht Informationen mit den Master-Automatisierungsgeräten PLC2, PLC3 und den Peripherieeinheiten Pe2, Pe3, Pe4 über einen ersten Abschnitt R1 der Verbindung Rs aus, dagegen mit der Peripherieeinheit Pe1 über einen zweiten Abschnitt R2 der Verbindung Rs.

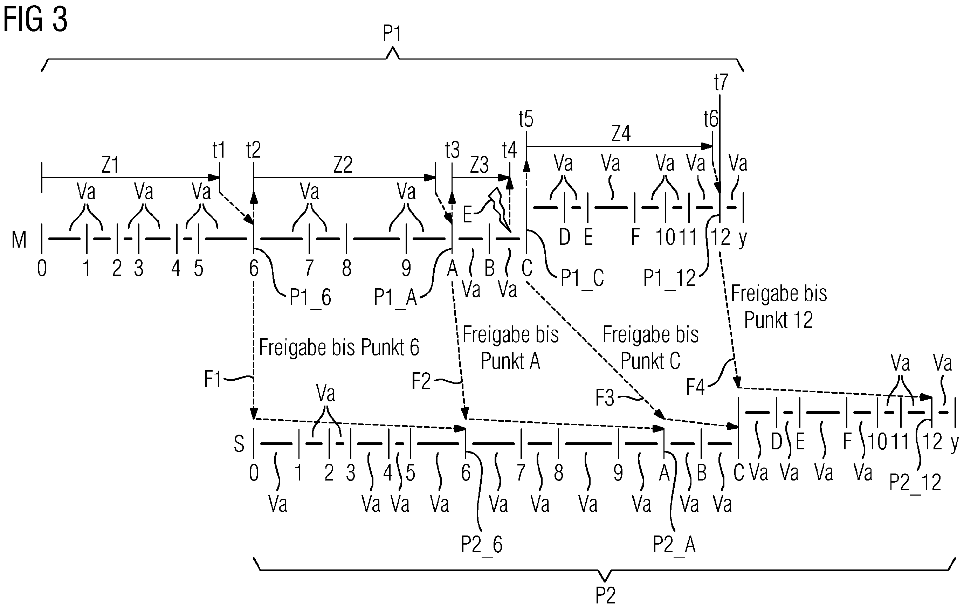

Zur Erläuterung einer ereignissynchronen Verarbeitung der Steuerprogramme wird im Folgenden auf die Figuren 3 bis 5 verwiesen, in welchen Abläufe einer zeitlich asynchronen Kopplung von einem der Master-Automatisierungsgeräte PLC1, PLC2, PLC3 - im Folgenden als Master M bezeichnet und dem Backup-Automatisierungsgerät Backup-PLC - im Folgenden als Slave S bezeichnet - dargestellt werden. Eine "ereignissynchrone Verarbeitung" bedeutet in diesem Zusammenhang, dass sowohl der Master als auch der Slave aufgrund eines Ereignisses gleiche Programmpfade des jeweiligen Steuerprogramms durchlaufen, wobei die Durchläufe zeitlich asynchron erfolgen.

Der Master M ist im vorliegenden Beispiel gemäß den Figuren 3 bis 5 im Hinblick auf die Steuerung eines technischen Prozesses führend und übernimmt die Prozesssteuerung, wobei der Master die Prozesseingangsinformationen bzw. Prozesseingangswerte von einer oder mehreren der Peripherieeinheiten liest und zeitlich asynchron dem Slave S bereitstellt. Der Slave S übernimmt nur dann die Masterfunktion bzw. die Masterschaft, falls der Master M aufgrund einer Störung ausfällt.

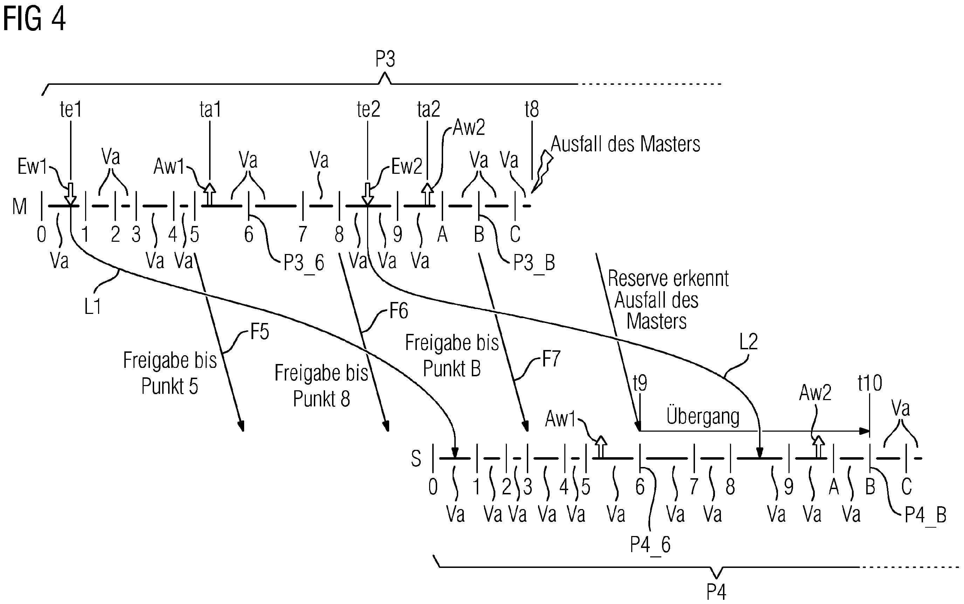

Der Master M verarbeitet ein Programm P1 zur Steuerung des technischen Prozesses, wobei auch der Slave S ein zu diesem Steuerprogramm P1 entsprechendes Programm P2 verarbeitet. Beide Steuerprogramme P1, P2 weisen eine Vielzahl von Verarbeitungsabschnitten (Va) unterschiedlicher Zeitdauer auf, wobei die Steuerprogramme P1, P2 an dem jeweiligen Beginn und dem jeweiligen Ende jedes Verarbeitungsabschnittes Va unterbrechbar sind. Beginn und Ende eines jeden Verarbeitungsabschnittes Va, welcher gewöhnlich eine Vielzahl von Programmcodes umfasst, repräsentieren somit unterbrechbare Programm- bzw. Unterbrechungsstellen 0, 1, 2, ... y. An diesen Stellen 0, 1, 2, ... y kann bei Bedarf das jeweilige Steuerprogramm P1, P2 mittels des Masters M und des Slaves S unterbrochen werden, um nach dem Auftreten eines Ereignisses bzw. eines Prozessalarms geeignete Reaktionen einleiten zu können. Ferner kann an diesen Unterbrechungsstellen 0, 1, 2, ... y das jeweilige Steuerprogramm P1, P2 unterbrochen werden, damit der Master M und der Slave S Freigaben, Quittungen oder sonstige Informationen über den Feldbus Fb oder über die Synchronisationsverbindung Sv (Figur 4) austauschen können. Nach Ablauf eines jeweiligen vorgebbaren bzw. vorgegebenen Zeitintervalls Zi, i= 1, 2, ... und zum jeweiligen Zeitpunkt des Auftretens einer nach Ablauf des jeweiligen Zeitintervalls Zi folgenden Unterbrechungsstelle - vorzugsweise der ersten auf das jeweilige Zeitintervalls Zi folgenden Unterbrechungsstelle -, übermittelt der Master M dem Slave S eine Freigabe bzw. ein Freigabesignal, welches dem Slave S anzeigt, bis zu welchem Verarbeitungsabschnitt Va der Slave S das Steuerprogramm P2 verarbeiten darf. Diese Verarbeitungsabschnitte Va des Steuerprogramms P2 entsprechen denen, die der Master M bereits während der Verarbeitung des Steuerprogramms P1 verarbeitet hat. Im vorliegenden Ausführungsbeispiel wird angenommen, dass nach Ablauf eines Zeitintervalls Z1 zu einem Zeitpunkt t1 und zu einem Zeitpunkt t2, zu welchem eine erste Unterbrechungsstelle P1_6 (Unterbrechungsstelle 6) auf das Zeitintervall Z1 folgt, der Master M dem Slave S eine Freigabe F1 übermittelt. Diese Freigabe F1 umfasst die Information für den Slave S, dass dieser sein zu verarbeitendes Steuerprogramm P2 bis zu einer Unterbrechungsstelle P2_6 (Unterbrechungsstelle 6) verarbeiten darf, wobei die Unterbrechungsstelle P2_6 des Steuerprogramms P2 der Unterbrechungsstelle P1_6 des Steuerprogramms P1 entspricht. Dies bedeutet, dass aufgrund der Freigabe der Slave S die Verarbeitungsabschnitte Va des Steuerprogramms P2 verarbeiten kann, welche den Verarbeitungsabschnitten Va des Steuerprogramms P1 bis zum Zeitpunkt der Erzeugung der Freigabe bzw. des Freigabesignals entsprechen, wobei im Beispiel der Einfachheit halber angenommen wird, dass der Zeitpunkt der Erzeugung der Freigabe dem Zeitpunkt der Übermittlung der Freigabe zum Slave S entspricht. Die Verarbeitung dieser Verarbeitungsschritte Va mittels des Slaves S erfolgt also zeitlich asynchron zur Verarbeitung der entsprechenden Verarbeitungsabschnitte Va mittels des Masters M, wobei nach der Verarbeitung der Verarbeitungsabschnitte Va des Steuerprogramms P2 durch den Slave S eine Bearbeitung von weiteren Verarbeitungsabschnitten Va durch den Slave S nur dann erfolgt, wenn der Master M dem Slave S eine weitere Freigabe übermittelt. Der Zeitpunkt des Auftretens dieser Unterbrechungsstelle P1_6, P2_6 (Unterbrechungsstelle 6) repräsentiert den Beginn eines auf das Zeitintervall Z1 folgenden Zeitintervalls Z2.

In der beschriebenen Art und Weise erfolgt die weitere zeitlich asynchrone Verarbeitung der Steuerprogramme P1, P2. Zu einem Zeitpunkt t3 des Auftretens einer ersten Unterbrechungsstelle P1_A nach Ablauf des Zeitintervalls Z2 übermittelt der Master M dem Slave S eine weitere Freigabe F2, die dem Slave S anzeigt, dass dieser weitere Verarbeitungsabschnitte Va bis zu der Unterbrechungsstelle P2_A bearbeiten kann. Diese Verarbeitungsabschnitte Va entsprechen wiederum denen, welche der Master M bereits vom Zeitpunkt t2 bis zum Zeitpunkt t3, also bis zur Unterbrechungsstelle P1_A, verarbeitet hat. Dies bedeutet, dass der Slave S die Verarbeitungsabschnitte Va von dem Zeitpunkt t2 der vorigen Freigabe F1 bis zum Zeitpunkt t3 der aktuellen Freigabe F2 verarbeitet. Der Zeitpunkt t3, zu welchem die erste Unterbrechungsstelle P1_A nach Ablauf des Zeitintervalls Z2 aufgetreten ist, ist der Beginn eines auf das Zeitintervall Z2 folgenden Zeitintervalls Z3.

Es kann nun vorkommen, dass während eines Zeitintervalls ein Ereignis, z. B. ein Ereignis in Form eines Prozessalarms, auftritt. Im Ausführungsbeispiel ist mit E ein derartiges Ereignis bezeichnet, auf welches der Master M während des Zeitintervalls Z3 zu einem Zeitpunkt t4 geeignet nach Maßgabe des Steuerprogramms P1 reagieren muss. In diesem Fall übermittelt der Master M dem Slave S eine Freigabe F3 nicht zu einem Zeitpunkt des Auftretens einer nach dem Zeitintervall Z3 folgenden Unterbrechungsstelle nach dem Zeitintervall Z3, sondern zu einem Zeitpunkt t5 des Auftretens einer auf das Auftreten des Ereignisses E folgenden Unterbrechungsstelle P1_C (Unterbrechungsstelle C). Dies bedeutet, dass das Zeitintervall Z3 aufgrund des Ereignisses E verkürzt wird, wobei der Zeitpunkt t5 der Beginn eines folgenden Zeitintervalls Z4 ist. Aufgrund der dem Slave S übermittelten Freigabe F3 verarbeitet der Slave S die Verarbeitungsabschnitte Va des Steuerprogramms P2, welche den Verarbeitungsabschnitten Va des Steuerprogramms P1 entsprechen, welche der Master M zwischen den Zeitpunkten t3 und t5 bereits verarbeitet hat.

Aufgrund des Ereignisses E verarbeitet der Master M während des Zeitintervalls Z4 Verarbeitungsabschnitte Va höherer Priorität, z. B. vollzieht der Master M einen Threadwechsel zum Zeitpunkt t5, und übermittelt wiederum nach Ablauf des Zeitintervalls Z4 zum Zeitpunkt t6 eine Freigabe F4 zu einem Zeitpunkt t7, zu welchem eine erste auf das Zeitintervall Z4 folgende Unterbrechungsstelle P1_12 (Unterbrechungsstelle 12) auftritt. Aufgrund dieser Freigabe verarbeitet der Slave S ebenfalls Verarbeitungsabschnitte Va bis zu einer Unterbrechungsstelle P2_12 (Unterbrechungsstelle 12) des Steuerprogramms P2, wobei diese Verarbeitungsabschnitte Va den Verarbeitungsabschnitten Va des Steuerprogramms P1 zwischen den Zeitpunkten t5 und t7 entsprechen und wobei der Slave S ebenfalls einen Threadwechsel vollzieht.

Wie erläutert, versetzen die Freigaben des Masters M den Slave S in die Lage, das gleiche "Threadgebirge" wie der Master M zu durchlaufen, was bedeutet, dass der Slave S einen "Threadwechsel" an einer Stelle im Steuerprogramm P2 vornimmt, die der Stelle im Steuerprogramm P1 entspricht. Der Slave S setzt seine Bearbeitung nur dann fort, wenn dieser dazu vom Master M durch eine Freigabe aufgefordert wird. Im Hinblick auf die Verarbeitung der Verarbeitungsabschnitte verarbeitet der Master M diese in Echtzeit wie in einem Stand-Alone- bzw. wie in einem nicht-redundanten Betrieb und erteilt in regelmäßigen Zeitabständen sowie nach Auftreten von Ereignissen Freigaben zur Verarbeitung entsprechender Verarbeitungsabschnitte durch den Slave S, wobei der Master M weiter sein Steuerprogramm P1 verarbeitet und nicht aktiv auf eine Antwort des Slaves S wartet. Der Slave S läuft bezüglich der Verarbeitung der entsprechenden Verarbeitungsabschnitte dem Master M nach und verarbeitet diese aufgrund der erteilten Master-Freigaben.

Im Folgenden wird auf Figur 4 verwiesen, in welcher ein Übergang der Masterschaft vom Master M zum Slave S dargestellt ist.
In der beschriebenen Art und Weise übermittelt der Master M dem Slave S Freigaben F5, F6, F7, wobei angenommen wird, dass zu einem Zeitpunkt t8 der Master M ausfällt.
Aufgrund der Freigaben F5 bis F7 verarbeitet der Slave S die Verarbeitungsabschnitte Va eines Steuerprogramms P4 bis zu einer Unterbrechungsstelle P4_B (Unterbrechungsstelle B), wobei diese Verarbeitungsabschnitte Va den Verarbeitungsabschnitten Va eines Steuerprogramms P3 bis zur Unterbrechungsstelle P3_B (Unterbrechungsstelle B) entsprechen, welche mittels des Masters M verarbeitet wurden.
Zu Zeitpunkten te1, te2 greift der Master M im Rahmen der Verarbeitung des Steuerprogramms P3 lesend auf die Peripherieeinheit Pe zu, was bedeutet, dass der Master M Prozesseingangswerte Ew1, Ew2 einliest, diese nach Maßgabe des Steuerprogramms P3 verarbeitet und Prozessausgangswerte Aw1, Aw2 erzeugt, die der Master M zu Zeitpunkten ta1, ta2 der Peripherieeinheit Pe übermittelt. Die Prozesseingangswerte Ew1, Ew2 übermittelt der Master M dem Slave S, was in der Zeichnung durch geschwungene Linien L1, L2 angedeutet ist. Die Übermittlung erfolgt zusammen mit den Freigaben F5, F7, um die Kommunikationslast zwischen dem Master M und dem Slave S während der Verarbeitung der Verarbeitungsabschnitte Va bis zu diesen Freigaben F5, F7 nicht zu erhöhen. Der Slave S verarbeitet ebenfalls diese Prozesseingangswerte Ew1, Ew2 entsprechend dem Steuerprogramm P4 und erzeugt ebenfalls die Prozessausgangswerte Aw1, Aw2, die der Slave S der Peripherieeinheit Pe übermittelt. Dabei wird davon ausgegangen, dass die Peripherieeinheit Pe eine "geschaltete" Peripherieeinheit mit einem Primär- und einem Sekundäranschluss ist. Der Primäranschluss ist zum Empfang der Prozessausgangswerte des Masters M und der Sekundäranschluss zum Empfang der Prozessausgangswerte des Slaves S vorgesehen, wobei der Slave S die Peripherieeinheit von dem Primär- auf den Sekundäranschluss umschaltet, falls der Slave S erkennt, dass der Master M ausgefallen ist.

Wie erläutert wird angenommen, dass zu einem Zeitpunkt t8 der Master M ausfällt. Der Slave S erkennt den Ausfall z. B. dadurch, dass der Master M dem Slave S kein Lebenszeichen über die Synchronisationsverbindung Sv oder den Feldbus Fb (Figur 4) während einer vorgegebenen Zeitdauer übermittelt hat. Nachdem der Slave S den Ausfall beispielsweise zu einem Zeitpunkt t9 erkannt hat, übernimmt der Slave S nicht sofort die Masterschaft; denn zu diesem Zeitpunkt t9 unterscheidet sich der Systemzustand des Slaves S von dem des Masters M und ein stoßfreier Wechsel bzw. Übergang ist daher nicht möglich. Zu diesem Zeitpunkt t9 hat der Slave S erst die Verarbeitungsabschnitte Va bis zu einer Unterbrechungsstelle P4_6 (Unterbrechungsstelle 6) verarbeitet, die entsprechenden Verarbeitungsabschnitte Va des Masters M bis zu einer Unterbrechungsstelle P3_6 (Unterbrechungsstelle 6) "liegen" somit in der Vergangenheit. Erst nach einem Übergang, d. h. nachdem der Slave S die mittels der Freigabe F7 freigegebenen Verarbeitungsabschnitte Va bis zur Unterbrechungsstelle P4_B zu einem Zeitpunkt t10 verarbeitet hat, übernimmt der Slave S die Masterschaft und somit die Steuerung des technischen Prozesses, wobei zu diesem Zeitpunkt t10 der Slave S die Peripherieeinheit von dem Primär- auf den Sekundäranschluss umschaltet. Während dieses Übergangs durchläuft also der (bisherige) Slave S noch das gleiche Threadgebirge pfadsynchron und verarbeitet die gleichen Prozesseingangswerte wie der (bisherige) Master M vor dessen Ausfall verarbeitet hat, wobei der (bisherige) Slave S aufgrund dieser Eingangswerte die gleichen Prozessausgangswerte wie der (bisherige) Master M ermittelt. Der Übergang ist dann beendet, wenn das Ziel der letzten Freigabe - im vorliegenden Beispiel die Verarbeitung der Verarbeitungsabschnitte Va bis zur Unterbrechungsstelle P4 B - erreicht ist.

Die Dauer des Übergangs entspricht im Wesentlichen der Dauer des zeitlichen Nachlaufs zum Zeitpunkt des "Failovers". Um den zeitlichen Nachlauf in einem tolerierbaren Maß zu halten, wird jede Freigabe F8 bis F12 (Figur 3) des Masters M dann durch den Slave S asynchron mittels jeweiliger Quittungen Q8 bis Q12 quittiert, falls der Slave S die jeweilige Bearbeitung abgeschlossen hat. Der Master M wertet die Anzahl der unquittierten Freigaben aus und ermittelt aus diesen den aktuellen Nachlauf des Slaves S. Für den Fall, dass der zeitliche Nachlauf zu hoch bzw. zu lang ist, was z. B. zu einem Redundanzverlust führen kann, ergreift der Master M geeignete Maßnahmen, um den zeitlichen Nachlauf zu vermindern bzw. nicht zu groß werden zu lassen.

Beispielsweise kann der Master M als Reaktion auf einen zu großen Nachlauf die Verarbeitung niederpriorer Threads aussetzen oder verzögern, wobei die Verarbeitung der höherprioren Threads deutlich weniger als 100 % der Rechenzeit erfordert. Somit hat der Master M weniger Verarbeitungsabschnitte zu durchlaufen und erzeugt weniger Freigaben, so dass der Slave S "aufholen" kann.

## Patentansprüche

1. Redundantes Automatisierungssystem mit mehreren miteinander verbundenen Automatisierungsgeräten, die zur Steuerung eines technischen Prozesses jeweils ein Steuerprogramm verarbeiten, **dadurch gekennzeichnet, dass** eines dieser Automatisierungsgeräte als Slave (Backup-PLC, S) und mindestens zwei dieser Automatisierungsgeräte jeweils als Master (PLC1, PLC2, PLC3, M) arbeiten, wobei
- der Slave (Backup-PLC, S) dazu ausgebildet ist, zu jedem Master-Steuerprogramm (Pc1, Pc2, Pc3) ein entsprechendes Slave-Steuerprogramm (Pb1, Pb2, Pb3) zu verarbeiten, und für den Fall, dass einer der Master (PLC1, PLC2, PLC3, M) ausfällt, die Funktion des ausgefallenen Masters (PLC1, PLC2, PLC3, M) zu übernehmen,
- jeder Master (PLC1, PLC2, PLC3, M) dazu ausgebildet ist, Verarbeitungsabschnitte (Va) seines zu verarbeitenden Master-Steuerprogramms (Pc1, Pc2, Pc3, P1) zu verarbeiten und nach dem Auftreten eines Ereignisses (E) oder nach Ablauf eines vorgegebenen Zeitintervalls (Zi, i=1, 2,...) dem Slave (Backup-PLC, S) eine Master-Freigabe (F1, F2, F3, F4) zu übermitteln, wobei die Master-Freigabe (F1, F2, F3, F4) dem Slave (Backup-PLC, S) anzeigt, bis zu welchem Verarbeitungsabschnitt (Va) der Slave (Backup-PLC, S) das diesem Master-Steuerprogramm (Pc1, Pc2, Pc3, P1) entsprechende Slave-Steuerprogramm (Pb1, Pb2, Pb3, P2) verarbeiten darf, und
- der Slave (Backup-PLC, S) dazu ausgebildet ist, aufgrund der Master-Freigaben (F1, F2, F3, F4) Verarbeitungsabschnitte (Va) der zu verarbeitenden Slave-Steuerprogramme (Pb1, Pb2, Pb3, P2) zu verarbeiten, welche den bereits verarbeiteten Verarbeitungsabschnitten (Va) der zu verarbeitenden Master-Steuerprogramme (Pc1, Pc2, Pc3, P1) von vorherigen Master-Freigaben (F1) bis zu den aktuellen Master-Freigaben (F2) entsprechen.

2. Redundantes Automatisierungssystem nach Anspruch 1, **dadurch gekennzeichnet, dass** der Slave (Backup-PLC, S) dazu ausgebildet ist, nach der Bearbeitung der jeweiligen Verarbeitungsabschnitte (Va) die jeweilige Master-Freigabe (F1, F2, F3, F4) dem jeweiligen Master (PLC1, PLC2, PLC3, M) zu quittieren.

3. Redundantes Automatisierungssystem nach Anspruch 1 oder 2, **dadurch gekennzeichnet, dass**
- das Automatisierungssystem dazu ausgebildet ist, in dem mittels des jeweiligen Masters (PLC1, PLC2, PLC3, M) zu verarbeitenden Master-Steuerprogramm (Pc1, Pc2, Pc3, P1) und in den mittels des Slaves (Backup-PLC, S) zu verarbeitenden Slave-Steuerprogrammen (Pb1, Pb2, Pb3, P2) jeweils zum Beginn und zum Ende des jeweiligen Verarbeitungsabschnitts (Va) Unterbrechungsstellen (P1_6, P1_A, P1_C, P1_12, P2_6, P2_A, P2_12) vorzusehen,
- der jeweilige Master (PLC1, PLC2, PLC3, M) dazu ausgebildet ist, als Beginn eines auf das jeweilige Zeitintervall (Zi, i=1, 2, ...) folgenden Zeitintervalls (Zi, i=1, 2, ...) vorzusehen
a) den Zeitpunkt (t2, t3, t6) des Auftretens einer auf das jeweilige Zeitintervall (Zi, i=1, 2, ...) folgenden Unterbrechungsstelle (P1_6, P1_A, P1_12), oder
b) den Zeitpunkt (t5) des Auftretens einer auf das Auftreten des Ereignisses (E) folgenden Unterbrechungsstelle (P1_C), und
- der jeweilige Master (PLC1, PLC2, PLC3, M) ferner dazu ausgebildet ist, zu dem unter a) oder b) genannten Zeitpunkt (t2, t3, t6; t5) dem Slave (Backup-PLC, S) die Master-Freigabe (F1, F2, F4; F3) zu übermitteln.

4. Redundantes Automatisierungssystem nach einem der Ansprüche 1 bis 3, **dadurch gekennzeichnet, dass** der jeweilige Master (PLC1, PLC2, PLC3, M) dazu ausgebildet ist, zum Zeitpunkt (t2, t3, t6; t5) der Übermittlung der Master-Freigabe (F1, F2, F4; F3) dem Slave (Backup-PLC, S) auch Prozesseingangswerte (Ew1, Ew2) zu übermitteln.

5. Redundantes Automatisierungssystem nach einem der Ansprüche 1 bis 4, **dadurch gekennzeichnet, dass** die Master (PLC1, PLC2, PLC3, M) und der Slave (Backup-PLC, S) gemäß einer Bus-, Ring-, Stern-Topologie oder gemäß einer Mischform dieser Topologien miteinander verbunden sind.

6. Redundantes Automatisierungssystem nach einem der Ansprüche 1 bis 5, **dadurch gekennzeichnet, dass** die Verbindung redundant ausgebildet ist.

7. Redundantes Automatisierungssystem nach einem der Ansprüche 1 bis 6, **dadurch gekennzeichnet, dass** der Slave (Backup-PLC, S) eine Multi-Core- oder PC-basierende Einheit ist.

8. Slave für ein redundantes Automatisierungssystem nach einem der Ansprüche 1 bis 7, wobei das redundante Automatisierungssystem mit mehreren miteinander verbundenen Automatisierungsgeräten versehen ist, die zur Steuerung eines technischen Prozesses jeweils ein Steuerprogramm verarbeiten, und wobei eines dieser Automatisierungsgeräte als Slave (Backup-PLC, S) und mindestens zwei dieser Automatisierungsgeräte jeweils als Master (PLC1, PLC2, PLC3, M) arbeiten, **dadurch gekennzeichnet, dass** der Slave (Backup-PLC, S) dazu ausgebildet ist
- zu jedem Master-Steuerprogramm (Pc1, Pc2, Pc3) ein entsprechendes Slave-Steuerprogramm (Pb1, Pb2, Pb3) zu verarbeiten, und für den Fall, dass einer der Master (PLC1, PLC2, PLC3, M) ausfällt, die Funktion des ausgefallenen Masters (PLC1, PLC2, PLC3, M) zu übernehmen, und
- aufgrund von Master-Freigaben (F1, F2, F3, F4) Verarbeitungsabschnitte (Va) der zu verarbeitenden Slave-Steuerprogramme (Pb1, Pb2, Pb3, P2) zu verarbeiten, welche den bereits verarbeiteten Verarbeitungsabschnitten (Va) der zu verarbeitenden Master-Steuerprogramme (Pc1, Pc2, Pc3, P1) von vorherigen Master-Freigaben (F1) bis zu den aktuellen Master-Freigaben (F2) entsprechen, wobei die jeweilige Master-Freigabe dem Slave (Backup-PLC, S) anzeigt, bis zu welchem Verarbeitungsabschnitt (Va) der Slave (Backup-PLC, S) das dem jeweiligen Master-Steuerprogramm (Pc1, Pc2, Pc3, P1) entsprechende Slave-Steuerprogramm (Pb1, Pb2, Pb3, P2) verarbeiten darf.

## Claims

1. Redundant automation system having a plurality of automation devices which are connected to one another and each process a control program in order to control a technical process, **characterized in that** one of these automation devices operates as a slave (backup PLC, S) and at least two of these automation devices each operate as a master (PLC1, PLC2, PLC3, M),
- the slave (backup PLC, S) being designed to process a corresponding slave control program (Pb1, Pb2, Pb3) for each master control program (Pc1, Pc2, Pc3) and, if one of the masters (PLC1, PLC2, PLC3, M) fails, to assume the function of the failed master (PLC1, PLC2, PLC3, M),
- each master (PLC1, PLC2, PLC3, M) being designed to process processing sections (Va) of its master control program (Pc1, Pc2, Pc3, P1) to be processed and to transmit a master release (F1, F2, F3, F4) to the slave (backup PLC, S) after an event (E) has occurred or after the expiry of a predefined interval of time (Zi, i=1, 2, ...), the master release (F1, F2, F3, F4) indicating to the slave (backup PLC, S) the processing section (Va) up to which the slave (backup PLC, S) can process the slave control program (Pb1, Pb2, Pb3, P2) corresponding to this master control program (Pc1, Pc2, Pc3, P1), and
- the slave (backup PLC, S) being designed to process processing sections (Va) of the slave control programs (Pb1, Pb2, Pb3, P2) to be processed on the basis of the master releases (F1, F2, F3, F4), which processing sections correspond to those processing sections (Va) of the master control programs (Pc1, Pc2, Pc3, P1) to be processed which have already been processed from previous master releases (F1) to the current master releases (F2).

2. Redundant automation system according to Claim 1, **characterized in that** the slave (backup PLC, S) is designed to acknowledge the respective master release (F1, F2, F3, F4) to the respective master (PLC1, PLC2, PLC3, M) after the respective processing sections (Va) have been processed.

3. Redundant automation system according to Claim 1 or 2, **characterized in that**
- the automation system is designed to provide breakpoints (P1_6, P1_A, P1_C, P1_12, P2_6, P2_A, P2_12) in the master control program (Pc1, Pc2, Pc3, P1) to be processed using the respective master (PLC1, PLC2, PLC3, M) and in the slave control programs (Pb1, Pb2, Pb3, P2) to be processed using the slave (backup PLC, S) at the beginning and end of the respective processing section (Va), respectively,
- the respective master (PLC1, PLC2, PLC3, M) is designed to provide the following as the beginning of an interval of time (Zi, i=1, 2, ...) following the respective interval of time (Zi, i=1, 2, ...)
a) the time (t2, t3, t6) at which a breakpoint (P1_6, P1_A, P1_12) following the respective interval of time (Zi, i=1, 2, ...) occurs, or
b) the time (t5) at which a breakpoint (P1_C) following the occurrence of the event (E) occurs, and
- the respective master (PLC1, PLC2, PLC3, M) is also designed to transmit the master release (F1, F2, F4; F3) to the slave (backup PLC, S) at the time (t2, t3, t6; t5) mentioned in a) or b).

4. Redundant automation system according to one of Claims 1 to 3, **characterized in that** the respective master (PLC1, PLC2, PLC3, M) is designed to also transmit process input values (Ew1, Ew2) to the slave (backup PLC, S) at the time (t2, t3, t6; t5) at which the master release (F1, F2, F4; F3) is transmitted.

5. Redundant automation system according to one of Claims 1 to 4, **characterized in that** the masters (PLC1, PLC2, PLC3, M) and the slave (backup PLC, S) are connected to one another according to a bus, ring or star topology or according to a mixed form of these topologies.

6. Redundant automation system according to one of Claims 1 to 5, **characterized in that** the connection is redundant.

7. Redundant automation system according to one of Claims 1 to 6, **characterized in that** the slave (backup PLC, S) is a multi-core-based or PC-based unit.

8. Slave for a redundant automation system according to one of claims 1 to 7, the redundant automation system being provided with a plurality of automation devices which are connected to one another and each process a control program in order to control a technical process, and one of these automation devices operating as a slave (backup PLC, S) and at least two of these automation devices each operating as a master (PLC1, PLC2, PLC3, M), **characterized in that** the slave (backup PLC, S) is designed
- to process a corresponding slave control program (Pbl, Pb2, Pb3) for each master control program (Pc1, Pc2, Pc3) and, if one of the masters (PLC1, PLC2, PLC3, M) fails, to assume the function of the failed master (PLC1, PLC2, PLC3, M), and
- to process processing sections (Va) of the slave control programs (Pb1, Pb2, Pb3, P2) to be processed on the basis of the master releases (F1, F2, F3, F4), which processing sections correspond to those processing sections (Va) of the master control programs (Pc1, Pc2, Pc3, P1) to be processed which have already been processed from previous master releases (F1) to the current master releases (F2), the respective master release indicating to the slave (backup PLC, S) the processing section (Va) up to which the slave (backup PLC, S) can process the slave control program (Pb1, Pb2, Pb3, P2) corresponding to the respective master control program (Pc1, Pc2, Pc3, P1).

## Revendications

1. Système d'automatisation redondant, ayant plusieurs appareils d'automatisation reliés entre eux, qui, pour commander un processus technique, traitent chacun un programme de commande, **caractérisé en ce que** l'un de ces appareils d'automatisation opère comme esclave (Backup-PLC, S) et au moins deux de ces appareils d'automatisation opèrent chacun comme maître (PLC1, PLC2, PLC3, M), dans lequel
- l'esclave (Backup-PLC, S) est constitué pour traiter, pour chaque programme de commande maître (PC1, PC2, PC3), un programme de commande esclave (Pb1, Pb2, Pb3) correspondant et, dans le cas où l'un des maîtres (PLC1, PLC2, PLC3, M) est défaillant, prendre en charge la fonction du maître (PLC1, PLC2, PLC3, M) défaillant,
- chaque maître (PLC1, PLC2, PLC3, M) est constitué pour traiter des parties (Va) de traitement de son programme de commande maître (Pc1, Pc2, Pc3, P1) à traiter et, après l'apparition d'un évènement (E) ou après l'expiration d'un intervalle (Zi, i=1, 2,...) de temps donné à l'avance, transmettre à l'esclave (Backup-PLC, S) une validation maître (F1, F2, F3, F4), la validation maître (F1, F2, F3, F4) indiquant à l'esclave (Backup-PLC, S) la partie (Va) de traitement jusqu'à laquelle l'esclave (Backup-PLC, S) peut traiter le programme de commande esclave (Pb1, Pb2, Pb3, P2) correspondant à ce programme de commande maître (Pc1, Pc2, Pc3, P1) et
- l'esclave (Backup-PLC, S) est constitué pour traiter, sur la base de la validation maître (F1, F2, F3, F4) des parties (Va) de traitement du programme de commande esclave (Pb1, Pb2, Pb3, P2) à traiter, qui correspondent aux parties (Va) de traitement déjà traitées des programmes (Pc1, Pc2, Pc3, P1) de commande maître à traiter, des validations maître (F1) précédentes aux validations maître (F2) présentes.

2. Système d'automatisation redondant suivant la revendication 1, **caractérisé en ce que** l'esclave (Backup-PLC, S) est constitué pour, après le traitement des parties (Va) de traitement respectives, accuser réception des validations maître (F1, F2, F3, F4) respectives au maître (PLC1, PLC2, PLC3, M) respectif.

3. Système d'automatisation redondant suivant la revendication 1 ou 2, **caractérisé en ce que**
- le système d'automatisation est constitué pour prévoir des points (P1_6, P1_A, P1_C, Pl_12, P2_6, P2_A, P2_12) d'interruption, dans le programme de commande maître (Pc1, Pc2, Pc3, P1) à traiter au moyen du maître (PLC1, PLC2, PLC3, M) respectif et dans les programmes de commande esclave (Pb1, Pb2, Pb3, P2) à traiter au moyen de l'esclave (Backup-PLC,S), respectivement, au début et à la fin de la partie (Va) de traitement respective,
- le maître (PLC1, PLC2, PLC3, M) respectif est constitué pour prévoir, comme début d'un intervalle (Zi, i=1, 2,...) de temps suivant l'intervalle (Zi, i=1, 2,...) de temps respectif
a) l'instant (t2, t3, t6) de l'apparition d'un point (P1_6, P1_A, P1_12) d'interruption suivant l'intervalle (Zi, i=1, 2,...) de temps respectif ou
b) l'instant (t5) de l'apparition d'un point (P1_C) d'interruption suivant l'apparition de l'évènement (E) et
- le maître (PLC1, PLC2, PLC3, M) respectif est constitué, en outre, pour transmettre la validation maître (F1, F2, F4 ; F3) à l'esclave (Backup-PLC, S) à l'instant (t2, t3, t6 ; t5) mentionné sous a) ou b).

4. Système d'automatisation redondant suivant l'une des revendications 1 à 3, **caractérisé en ce que** le maître (PLC1, PLC2, PLC3, M) respectif est constitué pour transmettre également des valeurs (Ew1, Ew2) d'entrée de processus à l'esclave (Backup-PLC, S) à l'instant (t2, t3, t6 ; t5) de la transmission de la validation maître (F1, F2, F4 ; F3).

5. Système d'automatisation redondant suivant l'une des revendications 1 à 4, **caractérisé en ce que** le maître (PLC1, PLC2, PLC3, M) et l'esclave (Backup-PLC, S) sont reliés entre eux suivant une topologie de bus, en anneau, en étoile ou suivant une forme mixte de ces topologies.

6. Système d'automatisation redondant suivant l'une des revendications 1 à 5, **caractérisé en ce que** la liaison est redondante.

7. Système d'automatisation redondant suivant l'une des revendications 1 à 6, **caractérisé en ce que** l'esclave (Backup-PLC, S) est une unité sur une base multi-core ou PC.

8. Esclave d'un système d'automatisation redondant suivant l'une des revendications 1 à 7, dans lequel le système d'automatisation redondant est pourvu de plusieurs appareils d'automatisation reliés entre eux, qui, pour commander un processus technique, traitent chacun un programme de commande et dans lequel l'un de ces appareils d'automatisation opère comme esclave (Backup-PLC, S) et au moins deux de ces appareils d'automatisation opèrent chacun comme maître (PLC1, PLC2, PLC3, M), **caractérisé en ce que** l'esclave (Backup-PLC, S) est constitué
- pour, pour chaque programme de commande maître (Pc1, Pc2, Pc3), traiter un programme de commande esclave (Pb1, Pb2, Pb3) correspondant et, dans le cas où l'un des maîtres (PLC1, PLC2, PLC3, M) est défaillant, prendre en charge la fonction du maître (PLC1, PLC2, PLC3, M) défaillant et
- pour, sur la base de validation maître (F1, F2, F3, F4), traiter des parties (Va) de traitement des programmes de commande esclave (Pb1, Pb2, Pb3, P2) à traiter, qui correspondent aux parties (Va) de traitement déjà traitées des programmes de commande maître (Pc1, Pc2, Pc3, P1) à traiter, des validations maître (F1) précédentes jusqu'aux validations maître (F2) présentes, la validation maître respective indiquant à l'esclave (Backup-PLC, S) la partie (Va) de traitement jusqu'à laquelle l'esclave (Backup-PLC, S) peut traiter le programme de commande esclave (Pb1, Pb2, Pb3, P2) correspondant au programme de commande maître (Pc1, Pc2, Pc3, P1) respectif.
